(19) Europäisches Patentamt
European Patent Office
Office européen des brevets

(11) Veröffentlichungsnummer : **0 487 452 A2**

(12) **EUROPÄISCHE PATENTANMELDUNG**

(21) Anmeldenummer : **91810869.7**

(22) Anmeldetag : **11.11.91**

(51) Int. Cl.$^5$ : **C08G 59/32,** C08G 59/38, C08G 59/50, C08L 69/00, C08L 79/08, // (C08L63/00, 79:08)

(30) Priorität : **19.11.90 CH 3671/90**

(43) Veröffentlichungstag der Anmeldung :
**27.05.92 Patentblatt 92/22**

(84) Benannte Vertragsstaaten :
**DE ES FR GB IT NL SE**

(71) Anmelder : **CIBA-GEIGY AG**
**Klybeckstrasse 141**
**CH-4002 Basel (CH)**
(84) **ES FR GB IT NL SE**

(71) Anmelder : **CIBA-GEIGY GmbH**
**Oeflinger Strasse 44**
**W-7867 Wehr/Baden (DE)**
(84) **DE**

(72) Erfinder : **Brunner, Rudolf, Dr.**
**Champ sur le Moulin 1**
**CH-1782 Belfaux (CH)**
Erfinder : **Schmid, Rolf, Dr.**
**Buhnenstock 14**
**CH-3150 Schwarzenburg (CH)**
Erfinder : **Queckbörner, Jobst, Dr.**
**Lane Farm, Heydon near Royston**
**Hertfordshire SG8 8TL (GB)**

(54) **Härtbares Epoxidharzgemisch.**

(57) Härtbare Epoxidharzgemische, enthaltend
(a) 30 bis 70 Gew. -Teile einer Tetraglycidylverbindung der Formel I

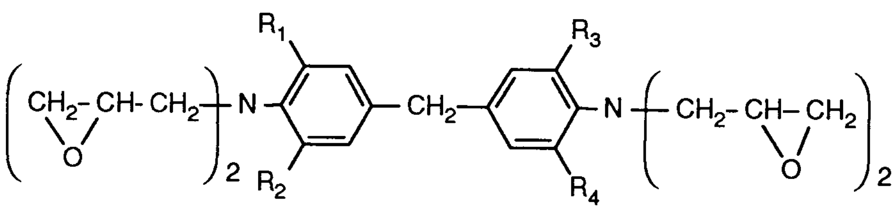

(I),

worin $R_1$, $R_2$, $R_3$ und $R_4$ unabhängig voneinander je ein Wasserstoffatom, ein Halogenatom oder ein $C_1$-$C_4$-Alkyl bedeuten, wobei mindestens einer der Substituenten $R_1$ bis $R_4$ für ein $C_1$-$C_4$-Alkyl steht, und

(b) 70 bis 30 Gew.-Teile eines aromatischen Glycidylethers mit durchschnittlich 2,0 bis 3,0 Glycidylethergruppen im Molekül, wobei (a) und (b) zusammen 100 Gew.-Teile betragen,

(c) ein Diaminodiphenylsulfon in einer Menge, dass pro 1 Epoxidäquivalent der Epoxidharzkomponente aus (a) und (b) 0,6 bis 1,3 Aequivalente Aminwasserstoff vorliegen und

(d) 1 bis 50 Gew.-Teile, bezogen auf 100 Gew.-Teile aus (a) und (b), eines darin gelösten Thermoplasten mit einer Glasumwandlungstemperatur von mindestens 150°C, eignen sich zur Herstellung von gehärteten Formstoffen, insbesondere zur Herstellung von Prepregs für faserverstärkte Verbundstoffe.

EP 0 487 452 A2

Jouve, 18, rue Saint-Denis, 75001 PARIS

Die vorliegende Erfindung betrifft ein härtbares Epoxidharzgemisch, enthaltend als Epoxidharz ein Gemisch aus einer Tetraglycidylverbindung eines zweikernigen, substituierten Diamins und einem aromatischen Glycidylether mit mindestens zwei Glycidylethergruppen im Molekül, als Härtungsmittel ein Diaminodiphenylsulfon und ausserdem einen Thermoplasten mit einer Glasumwandlungstemperatur von mindestens 150°C, und dessen Verwendung, insbesondere als Matrixharz für Prepregs.

Es ist bekannt, dass man durch Zusatz von bestimmten Thermoplasten zu härtbaren Epoxidharzgemischen deren Eigenschaften modifizieren kann. Beispielsweise ist es aus der EP-A-0 108 476 bekannt, dass man mit dem Polyetherimid ULTEM® als Zusatz zu härtbaren Epoxidharzgemischen, wie N,N,N',N'-Tetraglycidyl-4,4'-diaminodiphenylmethan und Diaminodiphenylsulfon, die Viskositätseigenschaften der Gemische vorteilhaft beeinflussen kann und Formstoffe mit höherer Flexibilität erreicht.

Es wurde nun gefunden, dass man durch Modifizierung eines zwei spezifische Epoxidharze enthaltenden Epoxidharzgemisches mit bestimmten Thermoplasten einerseits bessere Verarbeitungseigenschaften des härtbaren Gemisches, wie gute Fliesseigenschaften bei längerer Verarbeitungszeit, erhält. Andererseits weisen die aus dem erfindungsgemässen härtbaren Gemisch hergestellten Formstoffe eine bessere Biegefestigkeit und insbesondere eine bedeutend höhere Flexibilität auf. Durch die überraschend gute Verträglichkeit des härtbaren Epoxidharzgemisches mit Thermoplasten, wie beispielsweise ULTEM®, können diesem auch grössere Mengen an Thermoplasten zugesetzt werden, ohne dass eine Entmischung einsetzt.

Gegenstand vorliegender Erfindung ist somit ein härtbares Epoxidharzgemisch, enthaltend

(a) 30 bis 70 Gew.-Teile einer Tetraglycidylverbindung der Formel I

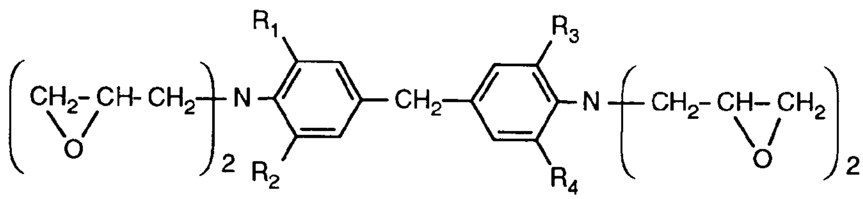 (I),

worin $R_1$, $R_2$, $R_3$ und $R_4$ unabhängig voneinander je ein Wasserstoffatom, ein Halogenatom oder ein $C_1$-$C_4$-Alkyl bedeuten, wobei mindestens einer der Substituenten $R_1$ bis $R_4$ für ein $C_1$-$C_4$-Alkyl steht,

(b) 70 bis 30 Gew.-Teile eines aromatischen Glycidylethers mit durchschnittlich 2,0 bis 3,0 Glycidylethergruppen im Molekül, wobei (a) und (b) zusammen 100 Gew.-Teile betragen,

(c) ein Diaminodiphenylsulfon in einer Menge, dass pro 1 Epoxidäquivalent der Epoxidharzkomponente aus (a) und (b) 0,6 bis 1,3 Aequivalente Aminwasserstoff vorlieben und

(d) 1 bis 50 Gew.-Teile, bezogen auf 100 Gew.-Teile aus (a) und (b), eines darin gelösten Thermoplasten mit einer Glasumwandlungstemperatur von mindestens 150°C.

Vorzugsweise enthält das erfindungsgemässe Gemisch (a) 40 bis 60 Gew.-Teile einer Tetraglycidylverbindung der Formel I und (b) 60 bis 40 Gew.-Teile eines aromatischen Glycidylethers.

Die Verbindungen der Formel I sind bekannt und werden beispielsweise in der EP-A-0 143 075 und in der JP-Kokai 84-078 beschrieben.

Als Halogensubstituenten sind Brom oder Chlor bevorzugt.

Von den Verbindungen der Formel I sind solche bevorzugt, worin mindestens einer der Substituenten $R_1$ bis $R_4$ für Methyl, Ethyl oder Isopropyl steht. Insbesondere enthalten die erfindungsgemässen Gemische eine Verbindung der Formel I, worin $R_1$ und $R_3$ je für ein Wasserstoffatom und $R_2$ und $R_4$ je für ein Ethyl stehen.

Als aromatische Glycidylether (b) kommen beispielsweise solche Epoxidverbindungen in Frage, die durch Umsetzung von Verbindungen, enthaltend zwei oder drei phenolische Hydroxylgruppen pro Molekül, mit geeigneten Epihalogenhydrinen, wie beispielsweise Epichlorhydrin, unter alkalischen Bedingungen oder aber in Gegenwart von sauren Katalysatoren, gefolgt von einer Behandlung mit Alkali, erhalten werden. Sie können sich von einkernigen Phenolen, wie Resorcin und Hydrochinon, oder von mehrkernigen Phenolen, wie Bis-(4-hydroxyphenyl)-methan, 4,4'-Dihydroxydiphenyl, 1,5-, 1,8-, 2,3-oder 2,7-Dihydroxynaphthalin, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5 dibrom-4-hydroxyphenyl)-propan und Novolaken aus Aldehyden, wie Formaldehyd, Acetaldehyd, Chloral und Furfurylaldehyd, und Phenolen, wie dem unsubstituierten Phenol und Phenolen, die im Ring durch Chloratome oder Alkylbruppen mit bis zu 9 C-Atomen substituiert sind, wie 4-Chlorphenol, 2-Methylphenol und 4-tert.-Butylphenol, ableiten.

Die genannten Epoxidverbindungen sind bekannt und zum Teil im Handel erhältlich.

Vorzugsweise enthalten die erfindungsgemässen Gemische aromatische Glycidylether mit durchschnittlich 2,0 bis 2,2 Glycidylethergruppen im Molekül. Insbesondere ist der im erfindungsgemässen Gemisch enthaltene aromatische Glycidylether (b) ein Bisphenol A-oder Bisphenyl F-diglycidylether, der Diglycidylether eines Dihydroxynaphthalins oder ein Gemisch dieser Glycidylether.

Im erfindungsgemässen Gemisch liegt das als Härtungsmittel verwendete Diaminodiphenylsulfon (c) vorzugsweise in einer solchen Menge vor, dass pro 1 Epoxidäquivalent 0,8 bis 1,0 Aequivalente Aminwasserstoff vorliegen.

Diaminodiphenylsulfone sind ebenfalls bekannt und zum Teil im Handel erhältlich. Vorzugsweise enthält das erfindungsgemässe Gemisch als Härter (c) 4,4′-Diaminodiphenylsulfon.

Als Thermoplaste (d) können in den erfindungsbemässen härtbaren Stoffgemischen all jene bekannten Polymere eingesetzt werden, die eine genügend hohe Glasumwandlungstemperatur (Tg), d.h. Tg $\geqq$ 150°C, aufweisen und im betreffenden Epoxidharz-Härter-System löslich sind. Anhand ihrer Eigenschaften sind als Thermoplaste besonders Polysulfone oder Polyethersulfone, welche Aminogruppen in der Kette enthalten, Polyimide oder Polyetherimide und insbesondere Polyimide und Polyetherimide geeignet. Dabei werden besonders Thermoplasten mit einer Glasumwandlungstemperatur von 180 bis 350°C, insbesondere von 190 bis 250°C, bevorzugt. Bei der Verwendung von Polyetherimiden werden insbesondere Polymere mit einer Tg von 220 bis 250°C, und bei der Verwendung von Polyimiden solche mit einer Tg von 280 bis 340°C bevorzugt. Ferner sind auch Polyamidimide geeignet.

Erfindungsgemäss können als Komponente (d) auch Gemische von zwei oder mehreren Thermoplasten verwendet werden.

Besonders geeignet als Thermoplaste (d) sind Polyimide, wie

- Polyimide mit Phenylindaneinheiten, wie sie z.B. im US-Patent 3,856,752 und in der EP-A 92 524 beschrieben sind, insbesondere solche mit einer Glasumwandlungstemperatur von etwa 305°C und einem durchschnittlichen Molekulargewicht von ca. 65000, wie z.B. das Matrimid® 5218 der Ciba-Geigy,
- Homo- und Copolyimide aus mindestens einer aromatischen Tetracarbonsäure und mindestens einem aromatischen Diamin, wie z.B. im US-Patent 4,629,777 offenbart, und
- Homo- und Copolyimide, wie sie z.B. in den EP-A 162 017, EP-A 181 837 und im US-Patent 4,629,685 beschrieben sind.

Bevorzugte Thermoplaste (d) sind auch Polyetherimide, wie z.B. die unter der Bezeichnung Ultem® (z.B. als Ultem® 1000) im Handel erhältlichen Produkte der Fa. General Electric. Weitere bevorzugte Thermoplasten sind Polyethersulfone, wie z.B. Victrex PES 100 P der ICI oder Udel P 1800 der Union Carbide.

Geeignete Polyamidimide sind beispielsweise die in den US-Patenten 3,894,114, 3,948,835; 3,926,911 und 3,950,408 beschriebenen Verbindungen.

Falls als Thermoplast (d) ein Polysulfon oder Polyethersulfon mit Aminogruppen in der Kette eingesetzt wird, so eignen sich beispielsweise solche mit einer inhärenten Viskosität ($\eta_{inh}$) von 0,02 bis 1,0, gemessen an einer 1 gew.-%igen Lösung in N-Methylpyrrolidon bei 25°C, die, bezogen auf die Gesamtmenge der im Polymeren vorhandenen Strukturelemente, 100 bis 5 Mol-% eines wiederkehrenden Strukturelementes der Formel II oder III

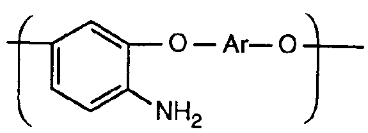

(II) oder

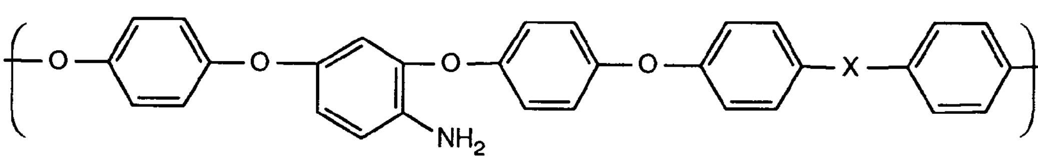

(III)

und 95 bis 0 Mol-% eines wiederkehrenden Strukturelementes der Formel IV

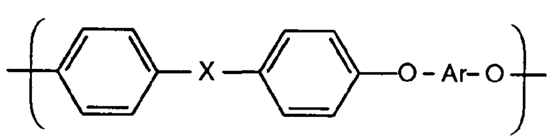

(IV)

enthalten, worin
X für $-SO_2-$ oder -CO- steht und
Ar eine unsubstituierte oder durch ein oder mehrere $C_1$-$C_4$-Alkyle, $C_1$-$C_4$-Alkoxy oder Halogenatome substituierte Gruppe der Formeln IVa bis IVe

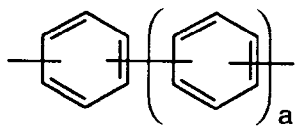 (IVa),

wobei a Null oder die Zahl 1 ist,

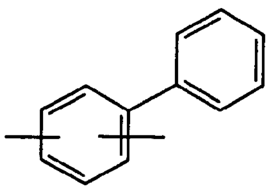 (IVb), 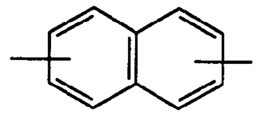 (IVc),

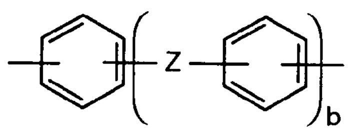 (IVd),

wobei b die Zahl 1 oder 2 ist, oder

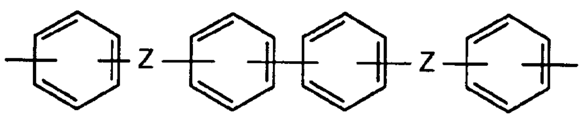 (IVe)

darstellt, worin Z für -CO-, $-SO_2-$, -SO-, -S-, -O-,

$$-\overset{|}{C}(CH_3)_2 \; , \quad -\overset{|}{C}(CF_3)_2 \; ,$$

$-CH_2-$ oder

$$\begin{array}{l} \;| \\ -C-CH_3 \\ \;| \\ \;C_6H_5 \end{array}$$

steht.

Diese Polyarylenether können hergestellt werden, indem man beispielsweise 1,3-Dichlor-4-nitrobenzol oder ein Gemisch aus 1,3-Dichlor-4-nitrobenzol und einer darin bis zu 95 Mol-%, vorzugsweise 90 Mol-%, enthaltenen Dihalogenverbindung der Formel V

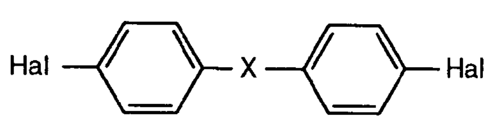 (V),

worin Hal für ein Halogenatom, vorzugsweise Chlor oder Fluor, steht und X die oben angegebene Bedeutung

hat, mit einem Diphenol der Formel VI

HO-Ar-OH (VI),

worin Ar die oben angebebene Bedeutung hat, oder indem man 2,4-Bis-(4-hydroxyphenoxy)-anilin oder ein Gemisch aus 2,4-Bis-(4-hydroxyphenoxy)-anilin und einem darin bis zu 95 Mol-%, vorzugsweise 90 Mol-%, enthaltenen Diphenol der Formel VI mit einer Halogenverbindung der Formel V in Gegenwart von Alkali und in einem aprotischen Lösungsmittel polykondensiert, bis der erhaltene Polyarylenether eine $\eta_{inh}$ von 0,02 bis 1,0 aufweist, und anschliessend den Nitrogruppen enthaltenden Polyarylenether in bekannter Weise durch vollständige katalytische Reduktion der Nitrogruppen in einen Aminogruppen aufweisenden Polyarylenether umwandelt.

Als Alkali verwendet man in diesem Verfahren in der Regel Alkali- und Erdalkalicarbonate, wie Natrium-, Kalium- oder Calciumcarbonat; doch können auch andere alkalische Reagentien, wie Natriumhydroxid, Kaliumhydroxid oder Calciumhydroxid, Verwendung finden.

Polare, aprotische Lösungsmittel, die beim Verfahren zur Herstellung der Polyarylenetherharze eingesetzt werden können, sind beispielsweise Diethylacetamid, Tetramethylharnstoff, N-Methylcaprolactam und bevorzugt Dimethylacetamid oder N-Methylpyrrolidon.

Die Reaktion wird zweckmässig bei erhöhter Temperatur durchgeführt, vorzugsweise bis zur Rückflusstemperatur des Lösungsmittels, also etwa bis 250°C.

Vorzugsweise enthält das erfindungsgemässe Gemisch einen Thermoplast (d) in einer Menge von 15 bis 30 Gew.-Teilen, bezogen auf 100 Gew.-Teile (a) und (b).

Im erfindungsgemässen Gemisch ist ferner als Thermoplast bevorzugt ein Polyimid oder Polyetherimid enthalten.

Die erfindungsgemässen Gemische können durch gutes Durchmischen bzw. Ineinanderlösen aller Komponenten bereitgestellt werden, wobei die einzelnen Komponenten in verschiedener Reihenfolge beigegeben werden können. Der Thermoplast kann z.B. unter Erhitzen im Epoxidharz gelöst werden, und nach Abkühlen können die weiteren Zusätze zugegeben werden. Man kann aber auch eine Lösung des Thermoplasten in einem inerten Lösungsmittel, wie z.B. in Methylenchlorid, herstellen und diese mit dem EpoxidharzHärter-Gemisch vermischen.

Die erfindungsgemässen Gemische können vielseitig angewendet werden und eignen sich beispielsweise als Giessharze, Laminier- oder Tränkharze, Formmassen, Dichtungsmassen, Einbettungs- und Isoliermassen für die Elektrotechnik und vorzugsweise als Klebstoffe und als Matrixharze für Verbundwerkstoffe, insbesondere zur Herstellung von Prepregs für faserverstärkte Kunststoffe.

Gewünschtenfalls, insbesondere bei der Mitverwendung von Modifizierungsmitteln, können die erfindungsgemässen Gemische in einem organischen Lösungsmittel, wie Toluol, Xylol, Methylethylketon, Methylenchlorid oder einem ähnlichen, in der Lackindustrie üblichen Lösungsmittel oder Lösungsmittelgemisch, gelöst werden. Solche Lösungen eignen sich vor allem als Imprägniermittel oder Beschichtungsmittel.

Die erfindungsgemässen härtbaren Gemische können ferner vor der Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen oder Formtrennmitteln, versetzt werden. Als Streckmittel, Verstärkungsmittel, Füllmittel und Pigmente, die in den erfindungsgemässen härtbaren Mischungen eingesetzt werden können, seien z.B. genannt: flüssige Cumaron-Inden-Harze, Textilfasern, Glasfasern, Asbestfasern, Borfasern, Kohlenstoffasern, Polyethylenpulver, Polypropylenpulver, Quarzmehl, mineralische Silikate, wie Glimmer, Asbestmehl, Schiefermehl, Kaolin, Kreidemehl, Antimontrioxid, Bentone, Lithopone, Schwerspat, Titandioxid, Russ, Graphit, Oxidfarben, wie Eisenoxid, oder Metallpulver, wie Aluminiumpulver oder Eisenpulver. Falls die erfindungsgemässen Mischungen für die Herstellung von Prepregs einbesetzt werden, ist eine Zugabe von Kurzfasern besonders erwünscht.

Als Verlaufmittel beim Einsatz der härtbaren Mischungen speziell im Oberflächenschutz kann man z.B. Silikone, flüssige Acrylharze, Celluloseacetobutyrat, Polyvinylbutyral, Wachse, Stearate etc. (welche z.T. auch als Formtrennmittel Anwendung finden) zusetzen.

Als Weichmacher können für die Modifizierüng der härtbaren Mischungen z.B. Dibutyl-, Dioctyl- und Dinonylphthalat, Trikresylphosphat, Trixylenylphosphat und Diphenoxyethylformal eingesetzt werden.

Die erfindungsbemässen Gemische werden vorzugsweise gehärtet, indem man sie auf eine Temperatur im Bereich von 120 bis 250°C, insbesondere 160° bis 220°C, erhitzt. Man kann die Härtung in bekannter Weise auch zwei- oder mehrstufig durchführen, wobei man die erste Härtungsstufe beiniedriger Temperatur und die Nachhärtung bei höherer Temperatur durchführt.

Gewünschtenfalls kann man den härtbaren Gemischen zur Herabsetzung der Viskosität aktive Verdünner, wie z.B. Neopentylglykol-, Butandiol- oder Hexandiol-Diglycidylether, zusetzen.

Gegenstand der vorliebenden Erfindung ist auch die Verwendung der erfindungsbemässen Gemische zur Herstellung von gehärteten Formstoffen, sowie die Verwendung zur Herstellung von Prepregs für faserverstärkte Verbundstoffe. Die Prepregs können in an sich bekannter Weise hergestellt werden, z.B. im Imprägnierverfahren in Anwesenheit eines der oben erwähnten Lösungsmittel, eines halogenierten Lösungsmittels, wie z.B. Methylenchlorid, oder im sogenannten "hot melt"-Verfahren.

Die erfindungsgemässen Formstoffe zeichnen sich im allgemeinen durch hohe Glasumwandlungstemperaturen bei gleichzeitig hohen mechanischen Festigkeiten, und insbesondere durch eine ausbezeichnete Biegefestigkeit sowie eine sehr hohe Flexibilität aus.

Nur in den folgenden Beispielen wird die Menge anstelle von Gew.-Teilen in g angegeben.

In den Beispielen werden folgende Verbindungen als Epoxidharz oder Thermoplast eingesetzt.

Epoxidharz A:

N,N,N',N'-Tetraglycidylderivat von 4,4'-Diamino-3,3'-diethyldiphenylmethan mit einem Epoxidgehalt von 7,95 Aequivalenten/kg und einer Viskosität von 9500 mPa·s bei 25°C.

Epoxidharz B:

Bisphenol A-diglycidylether mit einem Epoxidgehalt von 5,2 bis 5,4 Aequivalenten/kg und einer Viskosität bei 25°C von $10^4$-$1{,}2 \cdot 10^4$ mPa·s.

Epoxidharz C:

Bisphenol F-diglycidylether mit einem Epoxidgehalt von 5,5 bis 5,9 Aequivalenten/kg und einer Viskosität bei 25°C von 3000-10000 mPa·s.

Epoxidharz D:

Phenolnovolakepoxidharz mit einem Epoxidgehalt von 5,6 bis 5,8 Aequivalenten/kg und einer Schmelzviskosität bei 50°C von 1100-1700 mPa·s.

Polyetherimid I:

Polyetherimid Ultem® 1000 (General Electric) mit einer Glasumwandlungstemperatur ($T_g$) von 219°C und der wiederkehrenden Struktureinheit der Formel

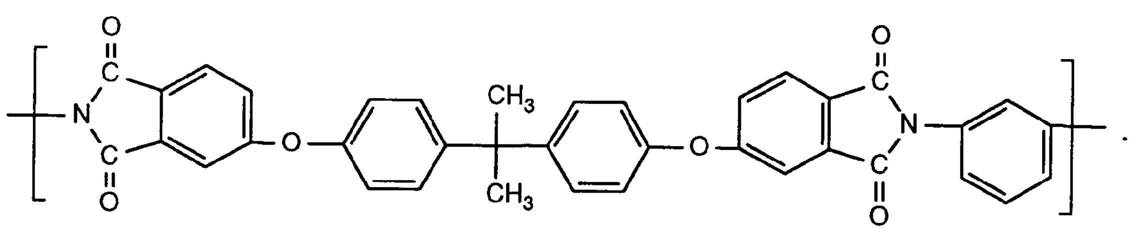

Polyimid II:

In einem 4,5 Liter-Sulfierkolben, ausgerüstet mit Rührer, Thermometer, Wasserabscheider, Kühler und Gaseinleitungsrohr, werden zu einer Lösung von 247,1 g (0,875 Mol) 3,3'-Diethyl-5,5'-dimethyl-4,4'-diaminodiphenylmethan und 66,86 g (0,375 Mol) 2,4-Diethyl-6-methyl-1,3-phenylendiamin in 1,5 Liter N-Methylpyrrolidon (NMP) bei 5°C 261,72 g (1,2 Mol) Pyromellitsäuredianhydrid während einei Stunde in 4 Portionen zubebeben. Nach zwei Stunden wird das Eisbad entfernt, und die Reaktionslösung wird über Nacht bei Raumtemperatur (RT) unter Stickstoff gerührt. Zur Reaktionslösung werden 750 ml Xylol gegeben und unter Rückfluss wird Wasser am Wasserabscheider azeotrop abgetrennt. Dann wird das Xylol aus dem Reaktionskolben abdestilliert und die noch warme Reaktionslösung unter kräftigem Rühren auf 15 Liter Wasser gegossen. Der Niederschlag wird abfiltriert, ein zweites Mal mit 5 Liter Wasser gemischt, filtriert und im Vakuum bei 100°C getrocknet. Es werden 526 g (98 % d. Th.) eines gelben Granulates erhalten, das in Methylenchlorid klar löslich ist, mit einem durch Gelpermeationschromatographie in Tetrahydrofuran ermittelten Molekulargewicht von 13300 (Zahlenmittel $M_n$) und 35380 (Gewichtsmittel $M_w$). Der Amingehalt (Titration in Phenol/Chloroform mit 0,1 N $HClO_4$) beträgt 1,19 mÄq./g. Die $T_g$, gemessen durch Differential-Scanning-Calorimetrie (DSC), beträgt

352°C.

Beispiel 1:

a) 30 g Polyetherimid I werden in 50 ml Methylenchlorid belöst. Zu der Lösung werden 50 g (0,40 Aequivalente) Epoxidharz A und 50 b (0,30 Aequiv.) Epoxidharz C zugegeben Unter Rühren wird das Methylenchlorid bei 50°C abbedampft. Die Mischung wird anschliessend auf 140°C erwärmt und mit 40 g (0,65 Aequiv.) 4,4'-Diaminodiphenylsulfon (DDS) versetzt. Nach 10 Minuten (min.) Rühren ist das DDS gelöst. Die Mischung wird zur Entfernung der Luftblasen evakuiert, in vorgewärmte Formen aus Anticorodal der Abmessung 80x80x4 mm begossen und während 4 Stunden (h) bei 180°C gehärtet.

Die Mischung ist bei RT schwach klebrig. Das ausbehärtete Produkt hat folgende Eigenschaften.

| | |
|---|---|
| Glasübergangstemperatur $Tg_0$ (TMA) | = 197°C |
| Glasübergangstemperatur Tg (TMA) | = 207°C |
| Biegefestigkeit (BF) nach ISO 178 | = 168 MPa |
| Randfaserdehnung (RD) nach ISO 178 | = 9,0 %. |

$Tg_0$ = Beginn des Glasübergangs
Tg = Temperatur der maximalen Eindringgeschwindigkeit
TMA = Thermomechanische Analyse; Aufheizgeschwindigkeit = 10°C/min.

b) Bei Verwendung von 20 g Polyetherimid I und sonst gleicher Zusammensetzung und Verarbeitung wie in Beispiel 1a) werden gehärtete Produkte mit folgenden Eigenschaften erhalten.

| | |
|---|---|
| $Tg_0$ (TMA) | = 182°C |
| Tg (TMA) | = 189°C |
| BF | = 169 MPa |
| RD | = 7,0 %. |

c) Bei Verwendung von 25 g Polyetherimid I und 50 g (0,27 Aequiv.) Epoxidharz B anstelle von 50 g Epoxidharz C und sonst gleicher Zusammensetzung und Verarbeitung wie in Beispiel 1a werden an den gehärteten Produkten folgende Eigenschaften gemessen.

| | |
|---|---|
| $Tg_0$ (TMA) | = 192°C |
| Tg (TMA) | = 200°C |
| BF | = 162 MPa |
| RD | = 7,8 %. |

Beispiel 2: Herstellung eines Kohlenstoffaserlaminates

Entsprechend Beispiel 1a) wird eine Harzmischunb aus 100 g Epoxidharz A, 100 g Epoxidharz D, 84 g DDS und 50 g Polyetherimid I hergestellt. Die Harzmischung wird mittels einer Rakel auf ein silikonisiertes Papier, das sich auf einer vorgewärmten Trommel (Trommelwickler) befindet, aufgetragen. Anschliessend wird eine Kohlenstofffaser ("T-300 6K" der Firma Toray) auf das Harz gewickelt, wobei der Harzfilm mittels IR-Heizung lokal auf ca. 120°C erwärmt wird. Aus dem Prepreg wird durch Härtung während 4 h bei 180°C im Autoklaven (Druck 5 bar) ein 2 mm dickes, unidirektionales Laminat hergestellt.

Das Laminat weist folgende Eigenschaften auf:

| | |
|---|---|
| $Tg_0$ (TMA) | = 200°C |
| Tg (TMA) | = 217 °C |
| BF (90° zur Faserrichtung) | = 112 MPa |

Interlaminare Scherfestigkeit (ILS) gemäss DIN 29971

| | |
|---|---|
| bei 20°C | = 100 MPa |
| bei 120°C | = 69 MPa |
| bei 160°C | = 54 MPa. |

Nach Lagerung während 14 Tagen in Wasser bei 71°C werden folgende Eigenschaften gemessen:

| | |
|---|---|
| Wasseraufname | = 0,8 % |
| ILS bei 20°C | = 95 MPa |
| ILS bei 120°C | = 54 MPa. |

Beispiel 3:

Bei Verwendung von 30 g Polyimid II, 50 g Epoxidharz A, 50 g Epoxidharz C sowie 35 g DDS und sonst gleicher Verarbeitung wie in Beispiel 1 werden am gehärteten Produkt folgende Eigenschaften gemessen:

| | |
|---|---|
| $Tg_0$ (TMA) | = 182°C |
| Tg (TMA) | = 196°C |
| BF | = 156 MPa |
| RD | = 7,8%. |

Beispiel 4:

Bei Verwendung von 35 g eines Polysulfons aus 38,5 Mol des wiederkehrenden Strukturelementes der Formel II, worin Ar für den Rest

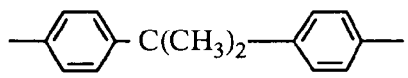

steht, und aus 2,5 Mol des wiederkehrenden Strukturelementes der Formel IV, worin Ar die oben angegebene Bedeutung hat und X für $-SO_2$-steht, mit einem $M_n$= 8500 und $M_n$= 28500 und einem Amingehalt von 0,13 mÄq./g, 50 g Epoxidharz A, 50 g Epoxidharz B sowie 40 g DDS und gleicher Verarbeitung wie in Beispiel 1 werden am gehärtenen Produkt folgende Eigenschaften bemessen:

| | |
|---|---|
| $Tg_0$ (TMA) | = 198°C |
| Tg (TMA) | = 207°C |
| BF | = 149 MPa |
| RD | = 9,1 %. |

## Patentansprüche

**1.** Härtbares Epoxidharzgemisch, enthaltend
(a) 30 bis 70 Gew.-Teile einer Tetraglycidylverbindunb der Formel I

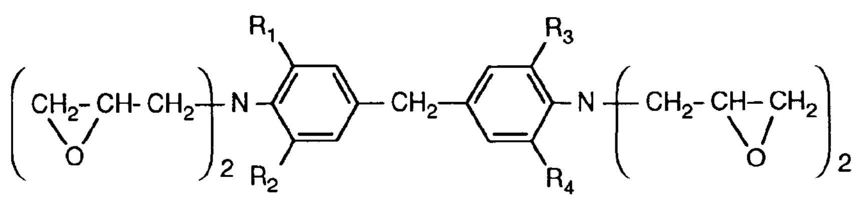
(I),

worin $R_1$, $R_2$, $R_3$ und $R_4$ unabhängig voneinander je ein Wasserstoffatom, ein Halogenatom oder ein $C_1$-$C_4$-Alkyl bedeuten, wobei mindestens einer der Substituenten $R_1$ bis $R_4$ für ein $C_1$-$C_4$-Alkyl steht,
(b) 70 bis 30 Gew.-Teile eines aromatischen Glycidylethers mit durchschnittlich 2,0 bis 3,0 Glycidylethergruppen im Molekül, wobei (a) und (b) zusammen 100 Gew.-Teile betragen,
(c) ein Diaminodiphenylsulfon in einer Menge, dass pro 1 Epoxidäquivalent der Epoxidharzkomponente aus (a) und (b) 0,6 bis 1,3 Aequivalente Aminwasserstoff vorliegen und
(d) 1 bis 50 Gew.-Teile, bezogen auf 100 Gew.-Teile aus (a) und (b), eines darin gelösten Thermoplasten mit einer Glasumwandlungstemperatur von mindestens 150°C.

**2.** Gemisch gemäss Anspruch 1, dadurch gekennzeichnet, dass in der Tetraglycidylverbindung der Formel I mindestens einer der Substituenten $R_1$ bis $R_4$ für Methyl, Ethyl oder Isopropyl steht.

**3.** Gemisch gemäss Anspruch 1, dadurch bekennzeichnet, dass (a) 40 bis 60 Gew.-Teile einer Tetraglycidylverbindung der Formel I und (b) 60 bis 40 Gew.-Teile eines aromatischen Glycidylethers enthalten sind.

**4.** Gemisch gemäss Anspruch 1, dadurch gekennzeichnet, dass in der Tetraglycidylverbindunb der Formel I $R_1$ und $R_3$ je für ein Wasserstoffatom und $R_2$ und $R_4$ je für ein Ethyl stehen.

5. Gemisch gemäss Anspruch 1, dadurch gekennzeichnet, dass der aromatische Glycidylether (b) durchschnittlich 2,0 bis 2,2 Glycidylethergruppen im Molekül enthält.

6. Gemisch gemäss Anspruch 1, dadurch gekennzeichnet, dass der aromatische Glycidylether (b) ein Bisphenol A- oder Bisphenol F-diglycidylether, der Digylcidylether eines Dihydroxynaphthalins oder ein Gemisch der genannten Diglycidylether ist.

7. Gemisch gemäss Anspruch 1, dadurch gekennzeichnet, dass das Diaminodiphenylsulfon c) in einer Menge vorliegt, dass pro 1 Epoxidäquivalent 0,8 bis 1,0 Aequivalente Aminwasserstoff vorliegen.

8. Gemisch gemäss Anspruch 1, dadurch gekennzeichnet, dass es als Komponente (c) 4,4′-Diaminodiphenylsulfon enthält.

9. Gemisch gemäss Anspruch 1, dadurch bekennzeichnet, dass die Menge des Thermoplasten (d) 15 bis 30 Gew.-Teile, bezogen auf 100 Gew.-Teile aus (a) und (b), beträgt.

10. Gemisch gemäss Anspruch 1, dadurch gekennzeichnet, dass der Thermoplast (d) ein Polyimid oder Polyetherimid ist.

11. Verwendung des Gemisches gemäss Anspruch 1 zur Herstellung von gehärteten Formstoffen.

12. Verwendung des Gemisches gemäss Anspruch 1 zur Herstellung von Prepregs für faserverstärkte Verbundstoffe.